# EUROPÄISCHE PATENTSCHRIFT

(11) **EP 2 666 117 B1**
(45) Veröffentlichungstag und Bekanntmachung des Hinweises auf die Patenterteilung: **11.07.2018**
(21) Anmeldenummer: 12717236.9
(22) Anmeldetag: 03.04.2012
(51) Int. Cl.: G06F 21/44, G06F 21/87, G08B 29/04

(54) **VERFAHREN ZUM PRÜFEN EINES TAMPERSCHUTZES EINES FELDGERÄTS SOWIE FELDGERÄT MIT TAMPERSCHUTZ**
METHOD FOR TESTING TAMPER PROTECTION OF A FIELD DEVICE AND FIELD DEVICE HAVING TAMPER PROTECTION
PROCÉDÉ POUR TESTER UNE PROTECTION ANTI-SABOTAGE D'UN APPAREIL DE TERRAIN ET APPAREIL DE TERRAIN AVEC PROTECTION ANTI-SABOTAGE

(30) Priorität: 12.04.2011 DE 102011007200
(43) Veröffentlichungstag der Anmeldung: 27.11.2013
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2012/056025
(87) Internationale Veröffentlichungsnummer: WO 2012/139923

(56) Entgegenhaltungen:
- EP-A1- 2 211 289
- WO-A2-2007/031908
- WO-A2-2008/102282
- TUYL P ET AL: "Strong authentication with physical unclonable functions", 1. Januar 2007 (2007-01-01), SECURITY, PRIVACY, AND TRUST IN MODERN DATA MANAGEMENT : WITH 13 TABLES, SPRINGER, BERLIN, DE, PAGE(S) 133 - 148, XP009139190, ISBN: 978-3-540-69860-9 das ganze Dokument
- JORGE GUAJARDO ET AL: "Anti-counterfeiting, key distribution, and key storage in an ambient world via physical unclonable functions", INFORMATION SYSTEMS FRONTIERS ; A JOURNAL OF RESEARCH AND INNOVATION, KLUWER ACADEMIC PUBLISHERS, BO, Bd. 11, Nr. 1, 23. Oktober 2008 (2008-10-23), Seiten 19-41, XP019677732, ISSN: 1572-9419
- JORGE GUAJARDO ET AL: "Physical Unclonable Functions and Public-Key Crypto for FPGA IP Protection", FIELD PROGRAMMABLE LOGIC AND APPLICATIONS, 2007. FPL 2007. INTERNATION AL CONFERENCE ON, IEEE, PI, 1. August 2007 (2007-08-01), Seiten 189-195, XP031159069, ISBN: 978-1-4244-1059-0

## Beschreibung

Die Erfindung betrifft ein Verfahren zum Prüfen eines Tamperschutzes eines Feldgeräts sowie ein Feldgerät mit Tamperschutz.

Feldgeräte, beispielsweise in Form von Weichen, Signalen, Schranken für Bahnübergänge, etc. sind üblicherweise mit einem Stellwerk oder einer Leitzentrale zu deren Steuerung und Bedienung verbunden. Feldgeräte in Form von Signalanlagen mit einem entsprechenden Stellwerk verbunden, um einen Schienenverkehr steuern zu können, beispielsweise durch temporäres Freigeben oder Sperren einer bestimmten Teilstrecke mittels der Signalanlage. Um eine sichere Kommunikation zwischen Feldgerät und Leitzentrale zu ermöglichen, wird in dem Feldgerät ein kryptographischer Schlüssel gespeichert, mit dem der Datenaustausch zwischen Feldgerät und Leitstelle verschlüsselt wird.

Um einem Angreifer ein Auslesen oder Manipulieren dieses kryptographischen Schlüssels zu erschweren, sind Hardware-Security-integrierte Schaltungen bekannt geworden, welche kryptographische Schlüssel speichern und kryptographische Operationen durchführen können. Diese integrierten Schaltungen verfügen über Sensoren, beispielsweise auf der integrierten Schaltung selbst, um ein unbefugtes Öffnen der integrierten Schaltung zu erkennen. Eine solche Hardware-Securityintegrierte Schaltung ist beispielsweise die integrierte Schaltung AT98 von Atmel deren Datenblatt unter http://www.atmel.com/dyn/resources/prod_documents/doc6528.pdf abrufbar ist.

Weiterhin ist es im Bereich von Feuermeldern oder Diebstahl-/Einbruchmeldern bekannt geworden, Schalter anzuordnen, welcher ein Öffnen eines jeweiligen Gehäuses erkennen oder ein Entfernen des jeweiligen Melders, beispielsweise durch Abschrauben von einer Wand oder dergleichen, erkennen. Ein derartiger Schalter ist beispielsweise das Modell Ademco 5870API von Honeywell, deren Daten unter http://library.ademconet.com/MWT/fs2/7/5877.pdf abrufbar sind.

Weiterhin ist es aus der US 7,685,438 bekannt geworden, magnetische Partikel in eine Schutzschicht einer integrierten Schaltung einzubetten. Diese magnetischen Partikel können durch Sensoren erfasst werden und daraus kann ein kryptographischer Schlüssel abgeleitet und bereitgestellt werden. Wird die Schutzschicht entfernt, werden auch die zur Schlüsselbereitstellung benötigten Informationen zerstört, so dass die integrierte Schaltung nicht mehr verschlüsselt kommunizieren kann. Auf dieser Weise wird die integrierte Schaltung selbst inaktiviert.

Außerdem ist aus der US 2008/192240 bekannt geworden, eine charakteristische Eigenschaft eines Lichtwellenleiters auszuwerten, um eine physikalische Manipulation des Lichtwellenleiters zu erkennen.

Tuyl P. et al beschreiben in "Strong authentication with physical unclonable functions" (SECURITY, PRIVACY, AND TRUST IN MODERN DATA MANAGEMENT, 1. Januar 2007 (2007-01-01), Springer, Berlin, DE, pages 133 - 148, XP009139190, ISBN: 978-3-540-69860-9) die Verwendung von zufällig verteilten dielektrischen Partikeln in einer Schutzschicht, welche einen elektrischen Schaltkreis abdeckt.

Des Weiteren offenbart die EP 2 211 289 A1 ein Verfahren und eine Kontrollvorrichtung zum Schutz eines Sensors gegen Manipulationen mittels einer Verzögerungsschaltung, welche zwischen Leiterbahnen eingebettete di-elektrische Mikroteile aufweist. Bei einem Manipulationsversuch an dem Sensor soll die Verzögerungsschaltung so beeinträchtigt sein, dass Verzögerungsmessungen abweichende Werte ergeben.

Eine Aufgabe der vorliegenden Erfindung ist es, ein Verfahren zum Prüfen eines Tamperschutzes eines Feldgeräts sowie ein Feldgerät mit Tamperschutz zur Verfügung zu stellen, welches einfach und zuverlässig durchführbar beziehungsweise herstellbar ist und einen hohen Tamperschutz gewährleistet.

Diese Aufgabe wird erfindungsgemäß durch ein Verfahren zum Prüfen eines Tamperschutzes eines Feldgeräts mit den Merkmalen des Anspruchs 1 gelöst.

Die Aufgabe wird ebenfalls durch ein Feldgerät mit Tamperschutz gemäß dem Anspruch 5 gelöst.

Einer der damit erzielten Vorteile ist, dass damit ein hoher Tamperschutz erreicht wird. Weiterhin wird ein einfacher und kostengünstiger Tamperschutz erreicht. Darüber hinaus wird die Wartung des Feldgerätes wesentlich vereinfacht. Schließlich kann das Feldgerät auch einfach mit dem Tamperschutz versehen werden, da keine filigrane und schwer handhabbare Gitterfolie als Tamperschutz verwendet wird.

Weitere vorteilhafte Weiterbildungen der Erfindung sind in den Unteransprüchen beschrieben.

Der mittels des Zufallsprozesses oder des Pseudozufallsprozesses erzielte Vorteil ist, dass damit zumindest pseudo-zufällig eine sogenannte physikalisch nicht kopierbare Funktion realisiert wird, da in jedem Gehäuse das zumindest eine Prüfelement innerhalb des Materials des Gehäuses in unterschiedliche Weise angeordnet und/oder ausgebildet ist. Sind eine Mehrzahl von Prüfelementen angeordnet können diese beispielsweise allein durch pseudo-zufällige Inhomogenitäten während des Herstellungsprozesses der Umhüllung eine physikalisch nicht kopierbare Funktion bereitstellen, so dass diese in einmaliger Weise in der Umhüllung verteilt sind. Einmalig bedeutet hier, dass, wenn mehrere Umhüllungen pseudo-zufällig hergestellt werden, jede Umhüllung für sich genommen einen einzigartigen physikalischen Fingerabdruck aufweist.

Zweckmäßigerweise wird das erste und/oder zweite Prüfsignal als ein galvanisches, magnetisches, optisches, thermisches, elektrisches und/oder elektromagnetisches Signal bereitgestellt. Der erzielte Vorteil dabei ist, dass damit das Prüfsignal an jeweilige Gegebenheiten, zum Beispiel an das Feldgerät, einfach angepasst werden kann. Darüber hinaus ist es möglich, zur Erhöhung der Sicherheit auch mehrere verschiedene Prüfsignale, beispielsweise ein thermisches und ein optisches Prüfsignal zu verwenden, um einen physikalischen Fingerabdruck zu erhalten.

Zweckmäßigerweise wird eine Information des physikalischen Fingerabdruckes auf dem Feldgerät und/oder in einer Datenbank gespeichert. Auf diese Weise kann die Sicherheit noch weiter erhöht werden, indem beispielsweise die Information über den physikalischen Fingerabdruck sowohl auf dem Feldgerät als auch in einer Datenbank gespeichert werden, sodass der auf dem Feldgerät gespeicherte physikalische Fingerabdruck und die Datenbankinformationen des physikalischen Fingerabdruckes abgeglichen werden. Das Feldgerät stellt dann anhand der vorgenommenen Messungen mit dem zweiten Prüfsignal fest, ob der physikalische Fingerabdruck mit dem gespeicherten physikalischen Fingerabdruck übereinstimmt. Auf diese Weise kann eine physikalische Manipulation detektiert werden. Weiter können in der Datenbank alternativ oder zusätzlich zusätzliche Informationen über den physikalischen Fingerabdruck gespeichert werden, um bei einem unvollständigen physikalischen Fingerabdruck oder beim einem Verdacht einer möglichen physikalischen Manipulation des Feldgeräts zusätzliche Prüfungen durchführen zu können. Dabei kann die zusätzliche Information nur in der Datenbank vorliegen.

Vorteilhafterweise wird die Umhüllungen durch Vergießen hergestellt. Auf diese Weise ist eine besonders einfache Herstellung der Umhüllung möglich. Außerdem kann zumindest eine Prüfelement auf einfache Weise in der Umhüllung zufällig oder pseudo-zufällig angeordnet werden.

Die Prüfelemente können beispielsweise durch Aufstreuen zufällig verteilt werden. Darüber ist es möglich, die Partikel in eine noch flüssige Vergussmasse der Umhüllung in unterschiedlicher Richtung in/oder unterschiedlicher Geschwindigkeit einzuschießen. Dies ermöglicht ebenfalls die Bereitstellung eines eindeutigen physikalischen Fingerabdrucks. Darüber hinaus ist es insbesondere möglich, auch eine isolierende Schicht vorzusehen, mit der beispielsweise eine unerwünschte Beeinflussung von Signalübertragungen von elektrischen Leiterbahnen im Feldgerät oder auf einem Träger, beispielsweise einer Leiterplatte, des Feldgeräts zu vermeiden.

Der mittels des Zufallsprozesses oder des Pseudozufallsprozesses am Feldgerät erzielte Vorteil ist, dass damit zumindest pseudo-zufällig eine sogenannte physikalisch nicht kopierbare Funktion realisiert wird, da in jedem Gehäuse das zumindest eine Prüfelement innerhalb des Materials des Gehäuses in unterschiedliche Weise angeordnet und/oder ausgebildet ist. Sind eine Mehrzahl von Prüfelementen angeordnet können diese beispielsweise allein durch pseudo-zufällige Inhomogenitäten während des Herstellungsprozesses der Umhüllung eine physikalisch nicht kopierbare Funktion bereitstellen, so dass diese in einmaliger Weise in der Umhüllung verteilt sind. Einmalig bedeutet hier, dass, wenn mehrere Umhüllungen pseudo-zufällig hergestellt werden, jede Umhüllung für sich genommen einen einzigartigen physikalischen Fingerabdruck aufweist.

Vorteilhafterweise ist bei einem Feldgerät das zumindest eine Prüfelement als zumindest eine elektrische Leitung ausgebildet. Der erzielte Vorteil dabei ist, dass damit auf einfache Weise ein Prüfelement zur Verfügung gestellt wird, welches auch auf einfache Weise zufällig im Material des Gehäuses angeordnet werden kann.

Es kann somit ein Prüfsignal an einer oder mehreren Kontaktflächen ausgegeben werden und über eine oder mehrere Kontaktflächen empfangen werden. Durch die so ermöglichte hohe kombinatorische Anzahl von Prüfmöglichkeiten über unterschiedliche Kontaktflächen kann auf zuverlässige Weise ein physikalischer Fingerabdruck zum Tamperschutz ermittelt werden.

Weitere Merkmale und Vorteile der Erfindung ergeben sich aus der nachfolgenden Beschreibung von Ausführungsformen anhand der Zeichnung.

Dabei zeigen in schematischer Form
- Fig. 1: ein Feldgerät gemäß einer ersten Ausführungsform der vorliegenden Erfindung und
- Fig. 2: ein Ablaufdiagramm eines Verfahrens gemäß einer ersten Ausführungsform der vorliegenden Erfindung.

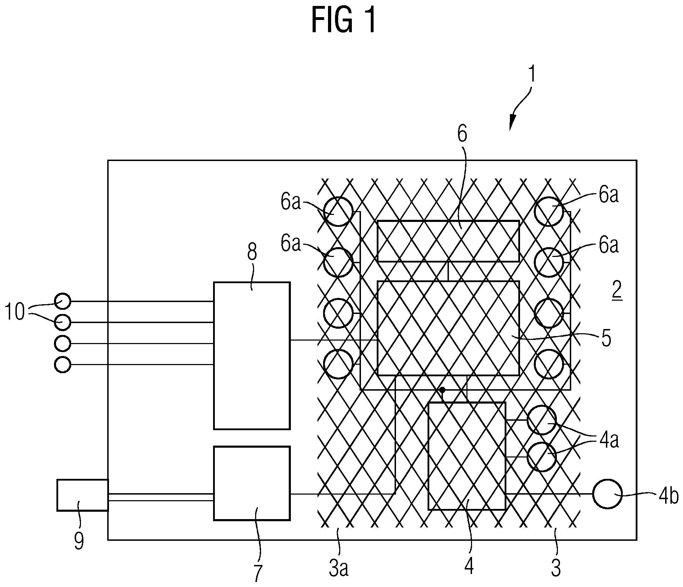

Fig. 1 zeigt ein Feldgerät in einer ersten Ausführungsform.

In Fig. 1 bezeichnet Bezugszeichen 1 ein Feldgerät. Das Feldgerät umfasst dabei einen Träger 2, auf dem eine Tamperschutzeinrichtung 4 angeordnet ist, die mit inneren Tampersensoren 4a und äußeren Tampersensoren 4b verbunden ist. Die Tamperschutzeinrichtung 4 ist weiter mit einem Steuerrechner 5 in Form einer CPU verbunden. Die CPU 5 ist mit einem Konfigurationsspeicher 6, einem Netzwerkbaustein 7 sowie einer Ein-/Ausgabeeinheit 8 verbunden. Der Netzwerkbaustein 7 ist dabei mit einer Schnittstelle 9 zum Austausch von Daten mit einer Leitstelle versehen. Die Schnittstelle 9 kann dabei beispielsweise in Form einer Ethernetschnittstelle ausgebildet sein. Die Ein-/Ausgabeeinheit 8 ist weiter mit Sensoren und/oder Aktoren 10 verbunden, die beispielsweise über das Feldgerät 1 betätigbar sind. Ist beispielsweise das Feldgerät 1 als Weiche ausgebildet, kann die jeweilige Einstellung der Weiche 1 mittels der Ein-/Ausgabeeinheit 8 und der daran angeschlossenen Stellglieder oder Aktoren 10 betätigt werden. Weiterhin ist eine Umhüllung in Form einer Vergussmasse 3 angeordnet, die die Tamperschutzeinrichtung 4, die CPU 5, den Konfigurationsspeicher 6, die Kontaktflächen 6a sowie die inneren Tampersensoren 4a im Wesentlichen vollständig umfasst. In der Vergussmasse 3 sind gemäß Figur 1 zufällig Briefelement in Form von elektrischen Leitungen 3a angeordnet, die mit jeweiligen Kontaktflächen 6a verbunden sind.

Prüfsignale, die mittels der Tamperschutzeinrichtung 4 über die Kontaktflächen 6a bereitgestellt werden können, können unterschiedliche Ströme, Spannungen, Frequenzen und/oder Signalformen umfassen. Durch die Zufälligkeiten bei der Anordnung der elektrischen Leitungen 3a in der Vergussmasse 3 wird ein charakteristischer physikalischer Fingerabdruck der Vergussmasse 3 und damit des Feldgerätes 1 möglich. Vor einem ersten Einsatz des Feldgeräts 1 wird der physikalische Fingerabdruck erstellt, indem die Tamperschutzeinrichtung 4 anhand verschiedener Prüfsignale einen physikalischen Fingerabdruck erstellt. Dieser physikalische Fingerabdruck kann auf dem Feldgerät 1 in dem Konfigurationsspeicher 6 und/oder auf einem Hintergrundsystem, beispielsweise einer Datenbank, welche über die Schnittstelle 9 mit der CPU 5 zum Datenaustausch verbunden werden kann, gespeichert werden.

Versucht nun ein Angreifer das Feldgerät 1 zu manipulieren, indem er versucht, den Konfigurationsspeicher 6 direkt auszulesen, ist eine mögliche Vorgehensweise des Angreifers, zumindest einen Teil der Vergussmasse 3 zu entfernen, beispielsweise mittels Anbohren oder durch chemisches Auflösen. Durch das Anbohren oder Auflösen der Vergussmasse 3 werden die physikalischen Eigenschaften der Vergussmasse 3 und der in die Vergussmasse 3 eingebetteten elektrischen Leitungen 3a im Allgemeinen irreparabel und nicht reproduzierbar verändert. Die Tamperschutzeinrichtung 4 überprüft hierzu beispielsweise in regelmäßigen Abständen, ob die physikalischen Eigenschaften der Vergussmasse 3, also insbesondere beispielsweise der Widerstand der elektrischen Leitungen 3a, welche in der Vergussmasse 3 angeordnet sind, noch mit dem hinterlegten physikalischen Fingerabdruck übereinstimmt.

Bei einem Anbohren der Vergussmasse 3 wird der physikalische Fingerabdruck verändert; dies wird durch die Tamperschutzeinrichtung 4 erkannt und einer Leitstelle, die an die Schnittstelle 9 angeschlossen ist übermittelt, sodass diese das Feldgerät 1 als manipuliert erkennt und geeignete Maßnahmen ermöglicht, indem beispielsweise die Leitstelle ein entsprechendes Signal an einen Benutzer der Leitstelle ausgibt, sodass der Benutzer einen Wartungstrupp zu dem Feldgerät 1 schicken kann, um den Zustand des Feldgeräts 1 vor Ort zu überprüfen und gegebenenfalls das Feldgerät 1 zu ersetzen.

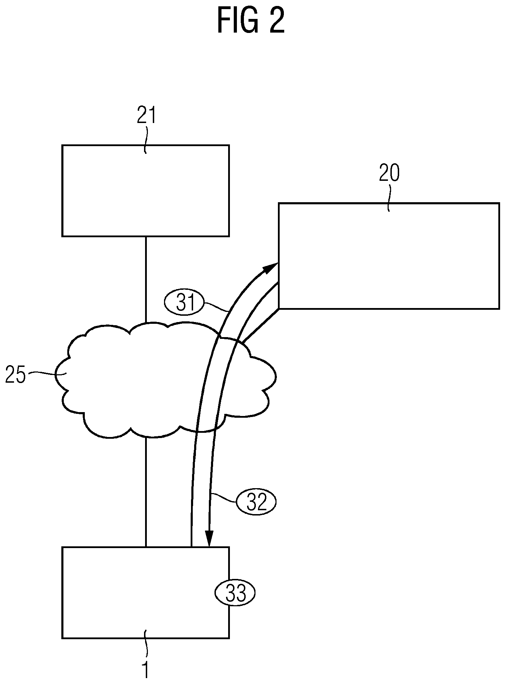

Figur 2 zeigt ein Ablaufdiagramm eines Verfahrens gemäß einer ersten Ausführungsform der vorliegenden Erfindung.

In Figur 2 ist das Feldgerät 1 über ein Netzwerk 25 mit einem Stellwerk 21 verbunden. Das Feldgerät 1 kann dabei als ein Signal, eine Weiche oder als eine Schranke eines Bahnautomatisierungssystems ausgebildet sein. Das Feldgerät 1 tauscht verschlüsselt Steuerdaten über das Netzwerk 25 mit dem Stellwerk 21 aus. Das Feldgerät 1 kann beispielsweise auch als Feldgerät in der Energieautomatisierung, der Prozessautomatisierung und/oder in Pipeline-Überwachung ausgebildet sein.

Um zum einen sogenannten Bootstrapping-Prozess mit dem Feldgerät 1 durchzuführen, muss zunächst in einem ersten Schritt 31 eine Sicherheits-Konfiguration von einem Bootstrapping-Server 20 angefordert werden. Hierzu authentisiert sich das Feldgerät 1 gegenüber dem Bootstrapping-Server 20 mittels eines vorgegebenen Feldgerät-Sicherheitsschlüssels. Eine Kommunikation zwischen den Bootstrapping-Server 20 und dem Feldgerät 1 kann dabei beispielsweise über SSL oder TLS geschützt erfolgen.

Der Bootstrapping-Server 20 prüft nun den Tamperschutz des Feldgeräts 1, indem dieser Steuersignale und/oder eine charakterisierende Information der anzuwendenden Steuersignale an das Feldgerät 1 überträgt. Diese Steuersignale werden im Feldgerät 1 beispielsweise durch die CPU 5 verarbeitet, die die Tamperschutzeinrichtung 4 derart steuert, dass Prüfsignale über die Kontaktflächen 6a ausgesendet werden. Die über die Kontaktflächen 6a übertragenen Prüfsignale werden an den Bootstrapping-Server 20 rückübertragen und dort mit dem hinterlegten physikalischen Fingerabdruck des Feldgeräts 1 verglichen. Stimmt der hinterlegte physikalische Fingerabdruck mit den ermittelten Prüfsignalen überein, wird dem Feldgerät 1 ein kryptographischer Schlüssel bereitgestellt. In einem weiteren Schritt 32 empfängt nun das Feldgerät 1 die Konfigurationseinstellungen und insbesondere zumindest einen konfigurierbaren Sicherheitsschlüssel. Das Feldgerät 1 speichert den empfangenen Sicherheitsschlüssel in einem dritten Schritt 33. Mittels des empfangenen Sicherheitsschlüssels ist nun eine verschlüsselte Kommunikation des Feldgeräts 1 mit dem Stellwerk 21 über das Netzwerk 25, insbesondere über das Internet, möglich. Steuer- und/oder Überwachungsdaten können zwischen dem Feldgerät 1 und dem Stellwerk 21 geschützt übertragen werden.

Zusammenfassend weist die Erfindung mehrere Vorteile auf. Ein Vorteil ist beispielsweise, dass damit ein Tamperschutz auf einfache Weise für ein Feldgerät bereitgestellt werden kann. Gleichzeitig ist ein hoher Tamperschutz gegeben, der sowohl einen passiven als auch einen aktiven Tamperschutz eines Feldgeräts ermöglicht.

Obwohl die vorliegende Erfindung vorstehend anhand bevorzugter Ausführungsbeispiele beschrieben wurde, ist sie nicht darauf beschränkt, sondern auf vielfältige Weise modifizierbar.

## Patentansprüche

1. Verfahren zum Prüfen eines Tamperschutzes eines Feldgeräts (1), umfassend die Schritte:
Anordnen (S1) von magnetischen, elektrischen und/oder dielektrischen Prüfelementen (3a) in einer Umhüllung (3) eines Kontaktflächen (6a) aufweisenden zu schützender Bereichs des Feldgeräts (1), wobei die Prüfelemente (3a) mittels eines Zufallsprozesses oder eines Pseudo-Zufallsprozesses innerhalb der Umhüllung (3) angeordnet werden,
Erstes Beaufschlagen (S2) der Prüfelemente (3a) mit einem ersten Prüfsignal, wobei das erste Prüfsignal an einer oder mehreren der Kontaktflächen (6a) ausgesendet wird,
Erstes Messen (S3) des ersten Prüfsignals zur Ermittlung eines physikalischen Fingerabdrucks,
Speichern (S4) des physikalischen Fingerabdrucks,
Zweites Beaufschlagen (S5) der Prüfelemente (3a) mit einem zweiten Prüfsignal,
Zweites Messen (S6) des zweiten Prüfsignals, wobei das zweite Prüfsignal an einer oder mehreren der Kontaktflächen (6a) ausgesendet wird,
Vergleichen (S7) des zweiten Prüfsignals mit dem physikalischen Fingerabdruck, und, falls das zweite Prüfsignal von dem physikalischen Fingerabdruck abweicht, Ausgeben (S8) eines Tampersignals,
**dadurch gekennzeichnet, dass**
die Umhüllung (3) schichtweise hergestellt wird, indem verschiedene Prüfelemente (3a) mittels des Zufallsprozesses oder des Pseudo-Zufallsprozesses in verschiedenen Schichten der Umhüllung (3) zufällig verteilt angeordnet werden.

2. Verfahren gemäß Anspruch 1,
**dadurch gekennzeichnet, dass**
das erste und/oder zweite Prüfsignal als ein galvanisches, magnetisches, optisches, thermisches, elektrisches, und/oder elektromagnetisches Signal bereitgestellt wird.

3. Verfahren gemäß Anspruch 1 oder 2,
**dadurch gekennzeichnet, dass**
eine Information des physikalischen Fingerabdrucks auf dem Feldgerät (1) und/oder in einer Datenbank gespeichert werden.

4. Verfahren gemäß zumindest einem der Ansprüche 1-3,
**dadurch gekennzeichnet, dass**
die Umhüllung (3) durch Vergießen hergestellt wird.

5. Feldgerät (1) mit Tamperschutz, insbesondere geeignet zur Durchführung eines Verfahrens gemäß zumindest einem der Ansprüche 1-4, umfassend:
eine Umhüllung (3) eines Kontaktflächen (6a) aufweisenden zu schützender Bereichs des Feldgeräts (1), wobei magnetische, elektrische und/oder dielektrische Prüfelemente (3a) mittels eines Zufallsprozesses oder eines Pseudo-Zufallsprozesses innerhalb der Umhüllung (3) angeordnet sind,
zumindest eine Prüfeinrichtung (4,5,6) zum Aussenden und/oder Empfangen eines Prüfsignals an einer oder mehreren der Kontaktflächen (6a) für das zumindest eine Prüfelement (3a), und
zumindest eine Schnittstelle (9) zum Übertragen des Prüfsignals,
wobei die Prüfeinrichtung (4,5,6) ausgebildet ist, ein zweites Prüfsignal mit einem physikalischen Fingerabdruck, der anhand eines ersten Prüfsignals festgelegt wird, zu vergleichen, und, falls das zweite Prüfsignal von dem physikalischen Fingerabdruck abweicht, ein Tampersignal auszugeben,
**dadurch gekennzeichnet, dass**
die Umhüllung (3) schichtweise hergestellt ist, wobei verschiedene Prüfelemente (3a) mittels des Zufallsprozesses oder des Pseudo-Zufallsprozesses in verschiedenen Schichten der Umhüllung (3) zufällig verteilt angeordnet sind.

6. Feldgerät gemäß Anspruch 5,
**dadurch gekennzeichnet, dass**
das jeweilige Prüfelement (3a) als eine elektrische Leitung ausgebildet ist.

## Claims

1. Method for testing tamper protection of a field device (1), comprising the following steps:
arrangement (S1) of magnetic, electrical and/or dielectric test elements (3a) in a sheath (3) of an area to be protected, having contact surfaces (6a), of the field device (1), wherein the test elements (3a) are arranged inside the sheath (3) by means of a random process or a pseudorandom process,
first application (S2) of a first test signal to the test elements (3a), wherein the first test signal is emitted at one or more of the contact surfaces (6a),
first measurement (S3) of the first test signal in order to determine a physical fingerprint,
storage (S4) of the physical fingerprint,
second application (S5) of a second test signal to the test elements (3a),
second measurement (S6) of the second test signal, wherein the second test signal is emitted at one or more of the contact surfaces (6a),
comparison (S7) of the second test signal with the physical fingerprint and, if the second test signal differs from the physical fingerprint, output (S8) of a tamper signal,
**characterized in that**
the sheath (3) is produced in layers by different test elements (3a) being arranged randomly dispersed in different layers of the sheath (3) by means of the random process or the pseudorandom process.

2. Method according to Claim 1,
**characterized in that**
the first and/or second test signal is/are provided in the form of a galvanic, magnetic, optical, thermal, electrical and/or electromagnetic signal.

3. Method according to Claim 1 or 2,
**characterized in that**
an item of information relating to the physical fingerprint is stored on the field device (1) and/or in a database.

4. Method according to at least one of Claims 1-3,
**characterized in that**
the sheath (3) is produced by means of potting.

5. Field device (1) having tamper protection, in particular suitable for carrying out a method according to at least one of Claims 1-4, comprising:
a sheath (3) of an area to be protected, having contact surfaces (6a), of the field device (1), wherein magnetic, electrical and/or dielectric test elements (3a) are arranged inside the sheath (3) by means of a random process or a pseudorandom process,
at least one test device (4, 5, 6) for emitting and/or receiving a test signal at one or more of the contact surfaces (6a) for the at least one test element (3a), and
at least one interface (9) for transmitting the test signal,
the test device (4, 5, 6) being designed to compare a second test signal with a physical fingerprint which is defined using a first test signal and, if the second test signal differs from the physical fingerprint, to output a tamper signal,
**characterized in that**
the sheath (3) is produced in layers, wherein different test elements (3a) are arranged randomly dispersed in different layers of the sheath (3) by means of the random process or the pseudorandom process.

6. Field device according to Claim 5,
**characterized in that**
the respective test element (3a) is in the form of an electrical line.

## Revendications

1. Procédé pour le contrôle d'une protection contre le sabotage d'un appareil de terrain (1), comportant les étapes :
de disposition (S1) d'éléments de contrôle (3a) magnétiques, électriques et/ou diélectriques dans une enveloppe (3) d'une zone de l'appareil de terrain (1) à protéger comprenant des surfaces de contact (6a), les éléments de contrôle (3a) étant disposés au moyen d'un processus aléatoire ou d'un processus pseudo-aléatoire à l'intérieur de l'enveloppe (3),
de première exposition (S2) des éléments de contrôle (3a) à un premier signal de contrôle, le premier signal de contrôle étant émis sur une ou plusieurs des surfaces de contact (6a),
de première mesure (S3) du premier signal de contrôle pour la détermination d'une empreinte digitale physique,
d'enregistrement (S4) de l'empreinte digitale physique,
de deuxième exposition (S5) des éléments de contrôle (3a) à un deuxième signal de contrôle,
de deuxième mesure (S6) du deuxième signal de contrôle, le deuxième signal de contrôle étant émis sur une ou plusieurs des surfaces de contact (6a),
de comparaison (S7) du deuxième signal de contrôle avec l'empreinte digitale physique, et, si le deuxième signal de contrôle diffère de l'empreinte digitale physique, de délivrance (S8) d'un signal de sabotage,
**caractérisé en ce que**
l'enveloppe (3) est préparée par couches, par le fait que différents éléments de contrôle (3a) sont disposés selon une répartition aléatoire au moyen du processus aléatoire ou du processus pseudo-aléatoire en différentes couches de l'enveloppe (3).

2. Procédé selon la revendication 1,
**caractérisé en ce que**
le premier et/ou deuxième signal de contrôle est produit sous la forme d'un signal galvanique, magnétique, optique, thermique, électrique, et/ou électromagnétique.

3. Procédé selon la revendication 1 ou la revendication 2,
**caractérisé en ce que**
une information de l'empreinte digitale physique est enregistrée sur l'appareil de terrain (1) et/ou dans une banque de données.

4. Procédé selon au moins l'une des revendications 1 à 3,
**caractérisé en ce que**
l'enveloppe (3) est préparée par coulée.

5. Appareil de terrain (1) avec protection contre le sabotage, en particulier approprié à la mise en oeuvre d'un procédé selon au moins l'une des revendications 1 à 4, comportant :
une enveloppe (3) d'une zone de l'appareil de terrain (1) à protéger comprenant des surfaces de contact (6a), des éléments de contrôle (3a) magnétiques, électriques et/ou diélectriques étant disposés au moyen d'un processus aléatoire ou d'un processus pseudo-aléatoire à l'intérieur de l'enveloppe (3),
au moyen un dispositif de contrôle (4, 5, 6) pour l'émission et/ou la réception d'un signal de contrôle sur une ou plusieurs des surfaces de contact (6a) pour l'au moins un élément de contrôle (3a), et
au moins une interface (9) pour la transmission du signal de contrôle,
dans lequel le dispositif de contrôle (4, 5, 6) est conçu pour comparer un deuxième signal de contrôle avec une empreinte digitale physique qui est fixée à l'aide d'un premier signal de contrôle, et, si le deuxième signal de contrôle diffère de l'empreinte digitale physique, pour délivrer un signal de sabotage,
**caractérisé en ce que**
l'enveloppe (3) est préparée par couches, différents éléments de contrôle (3a) étant disposés selon une répartition aléatoire au moyen du processus aléatoire ou du processus pseudo-aléatoire en différentes couches de l'enveloppe (3).

6. Appareil de terrain selon la revendication 5,
**caractérisé en ce que**
l'élément de contrôle (3a) respectif est conçu sous la forme d'une ligne électrique.
